# EUROPEAN PATENT SPECIFICATION

(11) **EP 1 345 755 B1**
(45) Date of publication and mention of the grant of the patent: **05.09.2007**
(21) Application number: 01272658.4
(22) Date of filing: 19.12.2001
(51) Int. Cl.: B29D 30/30, B65H 18/28

(54) **METHOD AND APPARATUS FOR MANUFACTURING PNEUMATIC TIRES**
VERFAHREN UND VORRICHTUNG ZUR HERSTELLUNG VON LUFTREIFEN
PROCEDE ET APPAREIL DE FABRICATION DE PNEUMATIQUES

(30) Priority: 29.12.2000 EP 00830876; 06.03.2001 US 273350 P
(43) Date of publication of application: 24.09.2003
(73) Proprietor: Pirelli Tyre S.p.A., 20126 Milano (IT)
(72) Inventor: TIENGO, Angelo, I-23875 Osnago (IT); SALA, Adamo, I-20041 Agrate Brianza (IT)
(74) Representative: Bottero, Claudio
(86) International application number: PCT/EP2001/015140
(87) International publication number: WO 2002/053356

(56) References cited:
- WO-A-99/62695
- DE-A- 1 913 898
- US-A- 4 580 738
- PATENT ABSTRACTS OF JAPAN vol. 009, no. 235 (M-415), 21 September 1985 (1985-09-21) & JP 60 089344 A (BRIDGESTONE KK), 20 May 1985 (1985-05-20)

## Description

The present invention relates to a method for supplying a semi-finished product made of elastomeric material used for manufacturing a rubber item.

More particularly, the present invention relates to a method for supplying a semi-finished product on the surface of an assembly drum used for manufacturing a rubber item.

Still more particularly, the present invention relates to a method for supplying a semi-finished product used in a process for manufacturing a tire.

Moreover, the invention relates to an apparatus for supplying said semi-finished product.

In the present description and in the following claims, the expression "semi-finished product" indicates an elongated element, i.e. having a prevailing dimension (length) with respect to the other two dimensions (width and thickness), made of elastomeric material, having constant thickness or a thickness variable along a transversal direction with respect to the same semi-finished product, used - jointly with other elements - as component of a rubber item.

Such semi-finished product may be a tape, i.e. an element solely consisting of elastomeric material, or a ribbon, i.e. an element comprising threads, cords, fibers or other reinforcing elements at least partly embedded within a tape of said elastomeric material.

It is noted herein that the expression "elastomeric material" indicates the rubber mixture as a whole, i.e. the mixture formed by at least a polymer base suitably mixed with reinforcing fillers and/or process additives of various types.

In general, a tire comprises: a torically shaped reinforcing carcass comprising at least one carcass ply having ends associated to a pair of bead wires forming the reinforcement of the beads, i.e. portions of the tire coupled to the wheel rim; a pair of sidewalls, made of elastomeric material and superposed to said carcass ply at laterally opposite positions; a tread crown-arranged around said carcass, and a reinforcing structure, known as belt structure, arranged between the aforementioned carcass ply and the tread.

In the processes for tire manufacturing known in the art, the elastomeric material as such is used, for example, for producing the sidewalls, the tread and the airproof layer, technically called liner, which internally coats the carcass of a tubeless tire, i.e. which does not require the use of an air tube. Moreover, the liner is generally coupled to a additional layer having limited thickness, of elastomeric material as well, which carries out the function of facilitating the adhesion between the liner itself and the carcass ply.

An additional element entirely made of elastomeric material and mainly used in the manufacture of a giant tire, i.e. of a tire used on heavy vehicles or the like, is the so-called under-belt filling, consisting of an elastomeric tape having quite considerable thickness, which once assembled is positioned between the carcass ply and the ends of the belt structure.

In a tire of giant type, the bead-reinforcing edges, the carcass ply and the belt structure comprise, on the other hand, a reinforcing structure embedded in the elastomeric material, said structure being constituted by a plurality of textile or metal threads or cords arranged according to suitable angles with respect to the circumferential direction of the tire.

All these semi-finished products are usually produced as continuous strips and stored in spools before their subsequent use.

During the manufacturing process of a tire, the aforementioned semi-finished products are supplied, according to a specific sequence of steps, to an assembly machine generally comprising at least one assembly drum on which said semi-finished products are arranged and assembled with one another to form the finished tire.

Said assembly machine is served by a plurality of auxiliary apparatuses (feeders) adapted to feed to the assembly drum all the different types of semi-finished products required by the assembly process.

In general, the semi-finished products are unwound by respective storing and feeding spools, and conveyed on said drums where the manual or automatic arrangement of a first end of the semi-finished product, or of the first ends in the case of simultaneous unwinding of more strips of material, such as for example the sidewalls and the under-belt fillings, is accomplished.

Once said first end has been arranged on the surface of the assembly drum, the drum is rotated until the same accomplishes a partial winding of the semi-finished product on the generally cylindrical surface of the assembly drum.

Said rotation is not completely performed so that the semi-finished product may undergo an operation of cutting to size and may be afterwards spliced, manually or automatically, by coupling the second end, obtained by said cutting operation, to the first end previously bound to the drum surface. Such splicing of the first and second ends may be of the butt splicing type, or may comprise a partial overlapping of the ends along a portion of limited length.

In general, in the case of giant tire manufacturing, the process involves, in the order, the arrangement of sidewalls, liner, edges, carcass ply and under-belt fillings on a first drum, called "first-step" drum (whereon the arrangement of the pair of bead wires is also carried out), whereas the belt structure and the tread are supplied and laid down on the carcass after the latter has been torically shaped on a second drum, called "second-step" drum, downstream of which the green tire is already completed and ready to undergo a vulcanization process at the end of which the finished tire is obtained.

The manufacturing processes of the semi-finished products, either when the same are solely made of elastomeric material or when the same include a reinforcement, involve a step of associating such semi-finished products to at least one protective sheet adapted to maintain the surface of the semi-finished product as free as possible from dust or other impurities with which such elements may come into contact during the traditional storing and/or transport steps, in order to preserve the adhesiveness of the same semi-finished products, which is essential for the subsequent reciprocal assembly.

In the prior art processes, said protective sheet, generally defined as "release fabric", mainly consists of a textile material, such as for example Meraclon®, and the same is generally coupled to the semi-finished product, manufactured in a continuous way, for example by extrusion, calendering or profiling, downstream of said manufacturing step.

The semi-finished product, associated to the release fabric, is thus wound in concentric turns around a cylindrical surface, such as for example the core of a storing spool; said storing spools, each loaded with a specific semi-finished product, being then loaded on the assembly machine, in particular arranged in the apparatus for supplying such semi-finished products to the aforementioned assembly drums.

During the assembling process of a tire, each semi-finished product is unwound from the respective storing spool and detached from the release fabric to which the semi-finished product has been previously coupled, so that only the semi-finished product continues its path towards the assembly drum, whereas the release fabric is recovered to be reused.

The present description refers to a method for supplying a semi-finished product made of elastomeric material and to an apparatus for accomplishing such operation as provided in the assembly process of a tire. More particularly, the present description relates to the step of detaching the release fabric from the semi-finished product to which the fabric is coupled. The operating techniques of the aforementioned drums and, in general, of an assembly machine as a whole shall not be described hereinafter since they are known in the art and not relevant for the purposes of the present invention.

As far as the Applicant knows, the prior art teaches to carry out such detaching process of a release fabric from a semi-finished product of elastomeric material by using a detachment device, such as for example an idle roll. More in detail, the semi-finished product, coupled to the release fabric, is unwound from the corresponding storing spool and brought on the surface of said detachment element, where a sudden change of direction of the release fabric with respect to the conveying direction of the semi-finished product is determined, so as to facilitate the detachment of the release fabric from the semi-finished product. The release fabric is thus conveyed towards a collecting device, usually a beam, which is rotated by a motor.

In such prior art process, it is the aforementioned motorized beam which extracts the semi-finished product from the storing spool by exerting a pulling action directly on the release fabric, separates the same from the release fabric and pushes the same towards the assembly drum.

In order to regulate the supplying process, the aforementioned storing spool is interconnected to a braking device so that, during unwinding and as a consequence of the variation of the amount of semi-finished product wound around the spool and thus of the weight of the same, the spool does not undergo substantial changes of its speed of rotation and, more particularly, does not increase its speed, thus causing an accumulation of semi-finished product upstream of said idle roll, thus counterbalancing, at least partly, the pulling action exerted by the collecting beam and making the aforementioned detachment process more difficult.

Moreover, the collecting beam of the release fabric is suitably controlled by a control device or clutch, so that as the mass of the release fabric wound around the beam surface increases, the speed of said collecting beam may be varied in time for ensuring a substantially constant pulling action on the release fabric, in order to extract the aforementioned semi-finished product as evenly as possible.

In other words, the supply of the semi-finished product to the assembly drum is controlled by the pull exerted on the release fabric by said motorized collecting beam.

Within the framework of the known supplying processes of this kind, US patent n. 4,580,738 teaches to unwind a thin liner material in a strip of resilient plastic material from a supply roll by directing the liner material around a peel-off roller mounted on the distal end of a swinging arm mounted adjacent the supply roll and over an idler roller located at a position such that a force component acting on the arm resulting from the tension in the liner is in the direction of the supply roll for urging the peel-off roller against the supply roll.

Japanese patent application JP 60-089344, on the other hand, discloses an apparatus allowing to feed a rubbery material accompanied by a liner to a drum by alternatively placing the upper surface and lower surface of the rubbery material onto the drum. To this end, the rubbery material is separated from the liner at a roller and then directly stuck to the drum or passed along a reversing roller which turns the rubbery material.

The Applicant has perceived that, in order to preserve the dimensional and structural characteristics of a semi-finished product, which is in the plastic state and thus easily deformable, the supply of said semi-finished product from a respective storing spool should be carried out so as to avoid to exert stretches on the semi-finished product itself in the steps of spool unwinding, detachment of the release fabric and transport of said semi-finished product to the assembly drum or to another assembly and/or handling device of the semi-finished products.

The Applicant has noted that the type of supply carried out according to the aforementioned procedure of the prior art causes uncontrollable stretches on the semi-finished product, particularly undesired since the semi-finished product, being made of green elastomeric material, thus still plastic, undergoes permanent modifications.

In other words, the aforementioned stretches cause such stresses within the semi-finished product as to cause a modification of the size and functional features of the latter, thus impairing the outcome or, in any case, making the assembly process more difficult, particularly when carried out with an automatic apparatus.

The Applicant, in fact, has perceived that the release fabrics used in the prior art, such as for example Meraclon®, have a considerable extensibility, which transfers part of the pulling action exerted by the beam on the release fabric to the semi-finished product to which such fabric is coupled. Also the detachment operation of the release fabric, as well as the conveying action to the drum, produce stretches and deformations on the semi-finished product.

The Applicant has found that it is possible to substantially eliminate stretches and deformations imparted to the semi-finished product by using a guiding and detachment device of the fabric comprising a plurality of rolls, of which at least one is motorized, in place of the idle roll of the prior art, the semi-finished product being preferably associated to an inextensible release fabric.

Such guiding and detachment device of the fabric, hereinafter defined also as pull capstan, applies a pulling action on the fabric at the same point in which the fabric detachment from the semi-finished product occurs.

The traction force developed by the collecting beam and by said capstan is totally absorbed by the inextensible release fabric and is not transferred, neither partially, to the semi-finished product during the unwinding step from the storing spool.

The Applicant has found that, by providing such plurality of rolls and motorizing at least one of said rolls, by means of said at least one roll it is possible to impart to said semi-finished product, once the latter has been freed from the release fabric, a translation speed substantially equal to that imparted to the same semi-finished product by the conveying means arranged upstream of the assembly drum and adapted to convey such semi-finished product towards said drum.

More in detail, the Applicant has found that, by moving at least one roll of the pull capstan with a rotation speed equal to that of a plurality of additional rolls arranged downstream of said device and belonging to the aforementioned conveying means, called in the art "roll and stand table", the translation speed of the semi-finished product leaving the feeding spool is equal to the translation speed of the semi-finished product at said stands. In other words, the guiding and detachment device of the fabric according to the invention ensures a transfer of the semi-finished product at a constant and predetermined speed, said semi-finished product being not pushed nor dragged. Such fact enables to prevent the appearance of stretches within the semi-finished product itself.

In a first aspect thereof, the present invention relates to a method for supplying a semi-finished product made of elastomeric material, supported on a release fabric and stored in concentric turns in a spool, towards an assembly and/or handling station of the semi-finished products, for assembling a rubber item, such as for example a tire, as defined in attached claim 1.

Preferably, the aforementioned method comprises the step of applying said traction force at the same point of imposition of said different advancing directions.

In a second aspect thereof, the invention relates to an apparatus for supplying a semi-finished product of elastomeric material, supported on a release fabric and stored in concentric turns in a spool, towards an assembly and/or handling station of the semi-finished products, for assembling a rubber item, such as for example a tire. Such apparatus comprises:
a) a braking device for adjusting the unwinding speed of such turns from said storing spool;
b) a detachment device for detaching said release fabric from said semi-finished product;
c) a collecting beam for collecting said release fabric; and
d) first motor means for rotating said collecting beam about its axis,
and is characterized in that it further comprises second motor means for rotating said detachment device.

In a preferred embodiment, the aforementioned apparatus comprises at least three guiding devices of the fabric, arranged at an intermediate point along the path of said fabric between said spool and said beam, one of said guiding devices also being a detachment device for detaching the fabric from the semi-finished product.

Preferably, such guiding devices are arranged, with respect to the unwinding direction of the fabric, as follows:
- the first guiding device, which also constitutes said detachment device, is arranged downstream of the storing spool;
- the third guiding device is arranged upstream of the collecting beam of the fabric, at a position spaced from the conveying path of the semi-finished product towards the assembly and/or handling station of the semi-finished products, for example the assembly drum;
- the second guiding device is arranged at an intermediate position between the first and the third guiding device, at a more spaced position from said conveying path of the semi-finished product with respect to the position of both said first and third guiding devices.

Additional features and advantages will appear more readily apparent from the following description of some preferred embodiments of the present invention.

Such description refers to the attached drawings, provided by way of an example and with no limitative purpose. In such drawings:
- Figure 1 shows a cross section, in partial view, of a tire for medium/heavy vehicles manufactured by means of the method and apparatus according to the invention;
- Figure 2 shows a partial side view of an apparatus according to the invention, adapted to supply a semi-finished product towards an assembly drum of a tire of the type of Figure 1;
- Figure 3 schematically shows a partial side view of a detail of a second embodiment of an apparatus according to the invention;
- Figure 4 schematically shows a partial side view of a detail of a third embodiment of an apparatus according to the invention;
- Figure 5 schematically shows a perspective view of a further embodiment of the apparatus according to the invention, comprising the supplying devices of the semi-finished product mounted in a separate container removably associable to a plant for assembling tires.

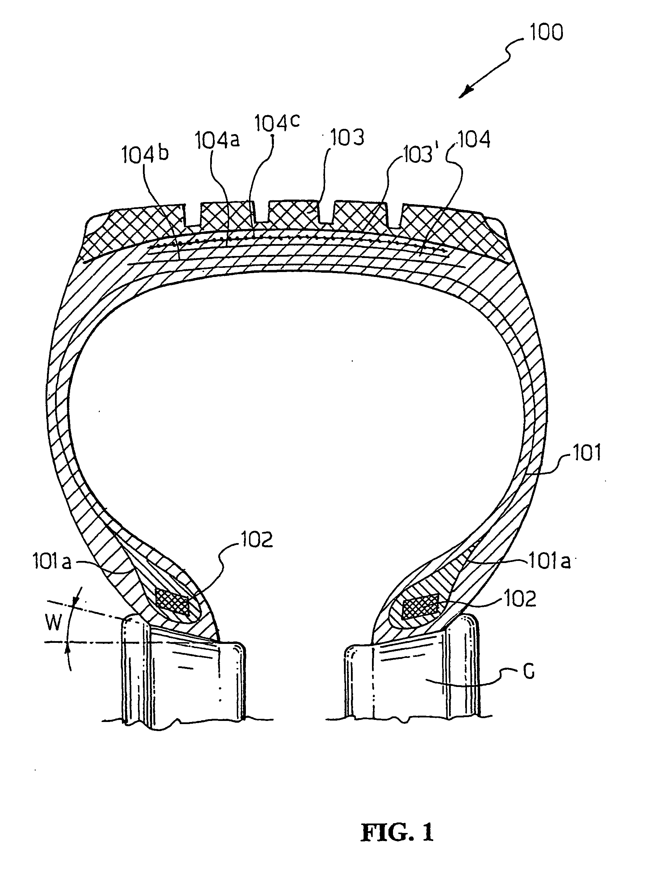

The following description refers to a method and to an apparatus for supplying a semi-finished product made of elastomeric material used in a process for assembling a tire, for example a giant tire 100 illustrated in Fig. 1. However, the method and the apparatus according to the invention are not limited to a process for assembling a tire, but they may be applied to any type of process requiring a step of supplying a semi-finished product made of a plastically deformable material, such as the elastomeric material.

The tire 100 comprises a torically shaped carcass including at least one carcass ply 101 provided with preferably metallic reinforcing cords lying in radial planes, i.e. containing the rotation axis of the tire. The ends 101a of the carcass ply are axially turned up, from the inside outwardly, around two metallic annular cores 102, usually known as bead cores, which form the reinforcement of the bead, i.e. of the radially inner ends of said tire. As said above, the beads ensure that the tire may be assembled onto a corresponding mounting rim C. In Figure 1, the tire 100 is supported on a so-called "channeled" rim, in which the supporting bases for the tire beads are outwardly conically diverging according to an angle w equal to about 15°.

A tread 103 made of elastomeric material, in which a relief pattern ensuring the contact of the tire 100 with the ground is formed, is crownwise arranged around said carcass. The tread 103 has a thickness of predetermined value and is delimited between an outer surface, intended to come in contact with the ground, and an inner surface coated with a thin sheet 103', made of elastomeric material specifically adapted to promote the necessary adhesion between the tread 103 and the underlying belt structure 104.

The aforementioned belt structure is an annular reinforcing structure, circumferentially almost inextensible, arranged between the carcass 101 and the tread 103. Usually, said belt comprises at least two radially superposed layers 104a, 104b, made of rubber-coated fabric, internally provided with metal reinforcing cords. Such cords are arranged in parallel with one another in each layer 104a, 104b and inclined with respect to the cords of an adjacent layer; preferably, such cords are symmetrically arranged with respect to the equatorial plane of the tire. Preferably, the aforementioned belt structure comprises an additional third layer 104c of metal cords of the high-elongation type, circumferentially wound around the underlying belt layers for the entire width, or only at the axially outer positions of the latter so as to enclose only the ends of said underlying belt layers. Such additional layer, in cooperation with the underlying layers, increases the ability of the belt to withstand the stresses acting on the tire during operation and linked to the inflation pressure and to the centrifugal force, and of ensuring high driving performances, in particular during curve running.

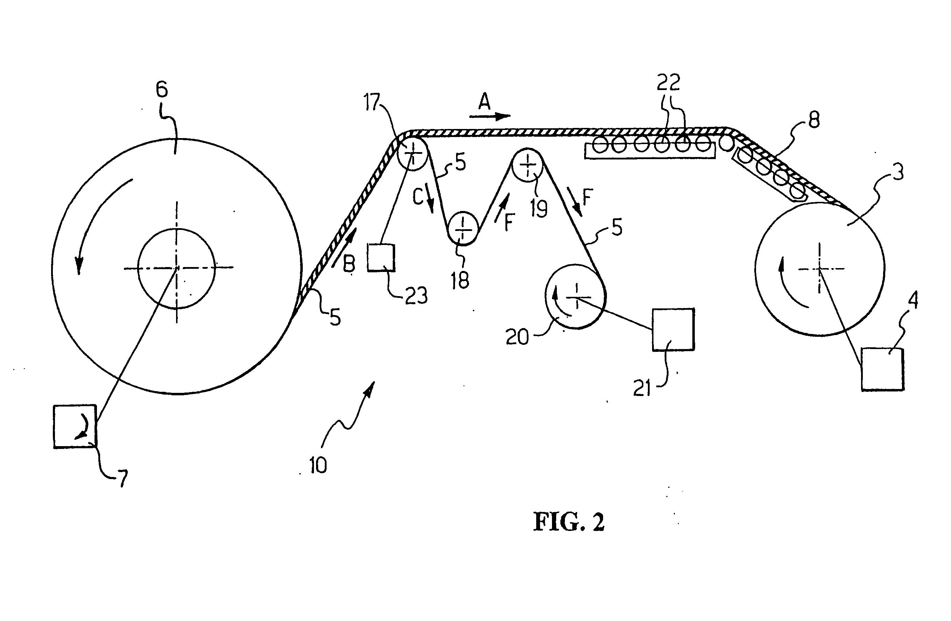

Figure 2 shows an apparatus 10 according to the invention, adapted to supply a semi-finished product 2 made of elastomeric material, for example a tread or a sidewall, stored in a storing spool 6 from which the semi-finished product is drawn and conveyed towards an assembly drum 3, rotated by a motor 4 after the separation from a release fabric 5, recovered by a collecting device 20.

As already said, the semi-finished product 2 is associated to a protective sheet, or release fabric 5 which, according to the present invention, is made of a substantially inextensible material and has such features as to maintain the adhesiveness of the semi-finished product 2 unchanged, but to adhere to said semi-finished product quite weakly, so that the detachment step from the latter is not difficult.

In a preferred embodiment of the invention, the Applicant has found it advantageous to use a sheet of a material commercially known with the name of Mylar®.

The semi-finished product 2 is manufactured in a special plant, for example an extruder, and the same is immediately associated to the release fabric 5; then the semi-finished product 2 is wound in concentric turns around a storing spool 6, ready for the subsequent use. When the semi-finished 2 product is to be used, the spool 6 is loaded on the assembly plant, in particular on a feeding apparatus of the semi-finished products, and the free end of the release fabric is brought on a collecting device 20. The aforementioned device is rotated for carrying out the unwinding of said turns from the spool 6 and the recovery of said fabric. The rotation of the spool is adjusted by a braking device 7 which, as mentioned above, enables to maintain the peripheral tangential speed of the storing spool constant at any moment of the unwinding step, both when the spool possesses the maximum diameter, since the unwinding has just begun and the semi-finished product completely loads the spool, and when the spool possesses the minimum diameter since the unwinding has almost completely finished and the spool is almost empty.

According to the embodiment shown in Figure 2, the apparatus 10 comprises a spool 6, a braking device 7 for said spool, a beam 20 for collecting the release fabric 5, a motor 21 adapted to impart a suitable rotation speed to the aforementioned beam, and three guiding devices of the fabric, preferably three rolls 17, 18, 19 around which the release fabric 5 is wound during the path from the spool 6 to the beam 20. The rolls 17, 18, 19 preferably have the same diameter and guide the release fabric 5 along an undulated path which will be described hereinbelow in the present description.

It should be noted that the expressions "storing spool" and "collecting beam" do not have a limiting purpose, but they are used, in order to simplify the description, for indicating any type of device, respectively for storing the semi-finished product and collecting the release fabric, usable as an alternative to said spool and beam, such as for example a storing beam and a collecting spool of the fabric.

Moreover, in Figure 2 a roll table 22 and a stand 8, the stand 8 being also provided with a series of rolls, for conveying the semi-finished product 2 onto the cylindrical surface of said drum 3 are shown. Since Figure 2 shows a partial schematic view of the supplying apparatus according to the invention, this figure does not take account of the real distances existing between the spool 6 and the assembly drum 3, and the same does not show a plurality of additional known elements which do not fall within the scope of the present invention. For example, Figure 2 does not show the conveyor belt system (one or more) generally present for supporting the semi-finished product in its path from the detachment device of the fabric to the roll table. In particular, Figure 2 does not show the festoon system arranged between the feeding spool 6 and the roll table 22, required for separating the supply zone of the semi-finished product from its handling zone; for example, such system enables to carry out a change of the spool without interrupting the manufacturing cycle, i.e. ensuring a continuous feeding to the assembly drum 3.

The axes of the spool 6, of the beam 20 and of the rolls 17, 18, 19, as well as those of the rolls 22 of the table and of the stand 8, are all parallel to one another, and perpendicular to a common support frame of the feeder of the semi-finished product, represented by the plane of Figure 2.

According to the present invention, the rolls 17, 18 and 19 are arranged in such a way as to guide the release fabric 5 along an undulated path adapted to facilitate a stretchless supply of the semi-finished product. At least one of said rolls constitutes the detachment device between the semi-finished product 2 and the release fabric 5, since the same imposes different advancing directions to said fabric and to said semi-finished product. In particular, at the output from said roll, the advancing directions of the semi-finished product and of the fabric are made to diverge from one another of an angle preferably not lower than 60°, and more preferably, next to 90°.

Moreover, at least one of the aforementioned rolls is motorized, so as to apply a traction force to said release fabric, in addition to or in replacement of the force exerted by the beam, for accomplishing the aforementioned braked unwinding of the turns of the semi-finished product from the storing spool, so that - as mentioned above - the semi-finished product 2 may be transferred from the spool 6 to the assembly drum 3 at a constant speed, without causing stretches on the same semi-finished product. Preferably, as shown in the embodiment of Figure 2, the first roll 17 is moved by a motor 23.

The motorized roll or rolls are rotated at a constant speed having a value which is a function of the diameter of the same rolls, such diameter being preferably comprised between 40 mm and 80 mm. Moreover, the outer surface of said rolls is preferably coated with an elastomeric material of high hardness (for example, a hardness comprised between 60° and 70° Shore A) in order to increase the friction between the roll and the release fabric, thus facilitating the pulling action on the latter.

According to the embodiment shown in Figure 2, said guiding devices are three and are arranged with their axes substantially matching with the vertices of an overturned triangle having a side facing the semi-finished product 2, moving towards the assembly drum after the detachment of the release fabric 5.

More particularly, said side forms a small angle with the conveying direction A of the semi-finished product 2 so that only the detachment device (roll 17) is in contact with said release fabric.

The spatial configuration of the aforementioned rolls 17, 18, 19 is such that the release fabric 5 follows an undulated path determined by the two sides of said triangle not facing the semi-finished product, i.e. those represented by the line joining the axes of the rolls 17-18 and 18-19.

More particularly, in the embodiment shown in Figure 2 it may be noted that the roll 19 is spaced apart from the semi-finished product 2 so as not to interfere with the travel of said semi-finished product.

With reference to the embodiment of the present invention shown in Figure 2, the method for supplying a semi-finished product 2 towards an assembly drum 3 thus involves the unwinding of said semi-finished product coupled to the release fabric from a storing spool 6. The semi-finished product 2 and the release fabric 5 coupled to the same are moved (arrow B of Figure 2) towards the first roll 17 by the pulling action exerted on the fabric by the collecting beam 20 and/or by the roll 17. The release fabric is detached from the semi-finished product 2 at the first roll 17 and is forced to follow an undulated path (arrows C, E, F) around the subsequent rolls 18, 19 up to its collection onto the beam 20. The semi-finished product 2, on the other hand, proceeds (arrow A) towards the assembly drum 3 once the same has been separated from the release fabric 5.

With reference to the configuration shown in Figure 2, along said path, the release fabric 5 comes in contact at first surface thereof with a curvilinear portion of the rolls 17 and 19 and at the opposite surface with a curvilinear portion of the roll 18.

Preferably, such curvilinear portions correspond to a surface arc of the roll comprised between 90° and 180° but, more preferably, not less than 135°.

Such configuration of triangular type with the corresponding undulated path with sudden direction changes imposed to the release fabric 5 transforms the rolls assembly in a pull capstan capable of exerting on the fabric a pulling action of a constant and high value, usable in combination with or in replacement of the pulling action exerted by the beam 20.

As mentioned hereinabove, according to the present invention the semi-finished product 2 is associated to a release fabric 5 made of inextensible material and thus capable of withstanding the pulling action applied by said capstan or by said beam without undergoing any elongation. Preferably, said release fabric 5 is made of Mylar® and has a thickness comprised between 0.1 mm and 0.5 mm.

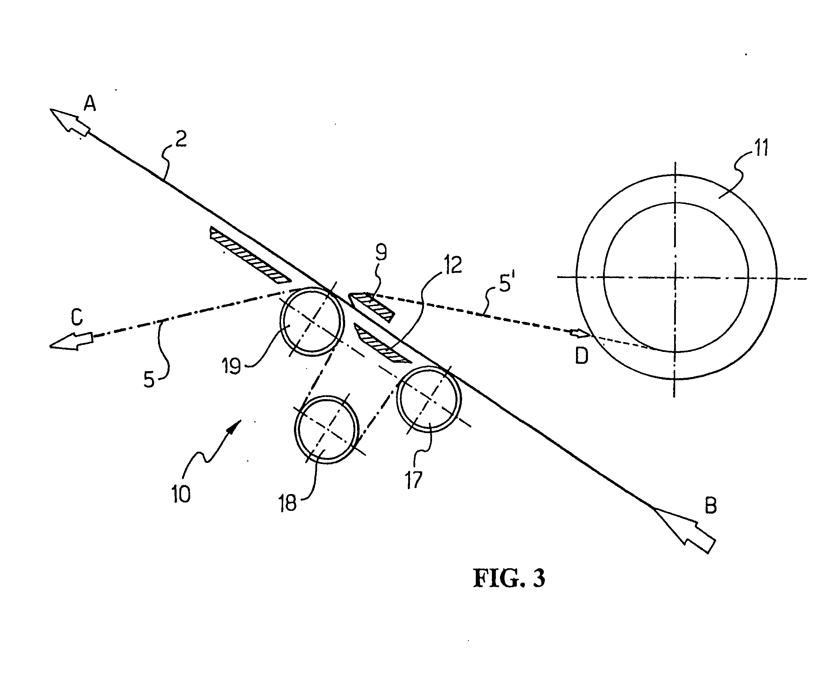

Figure 3 shows an additional embodiment of the apparatus 10 according to the present invention, specifically applicable when the semi-finished product 2 (arrow B) is provided with a pair of release fabrics respectively arranged on both surfaces of the semi-finished product. More particularly, the semi-finished product 2 (for example, the sidewalls or the metal fabric tapes in the case of a process for manufacturing a giant tire) is provided with a first release fabric 5 arranged on one of its surfaces as illustrated in Figure 2, and with a second release fabric 5', generally different from the fabric 5 and constituted by a polyethylene film. The second release fabric 5' and the first release fabric 5 carry out the aforementioned protective functions on the two opposite surfaces of the semi-finished product 2.

As may be inferred from Figure 3, the first release fabric 5 is detached by means of an apparatus 10 according to the present invention, and the same is sent (arrow C) to a collecting beam, not shown. The second release fabric 5', on the other hand, is detached by a separation device 9 of the so-called knife type, which is fixed with respect to the support frame, and conveyed (arrow D) to a different collecting beam 11.

In this alternative embodiment (Figure 3), the roll 19 is arranged at the same level as the roll 17 with respect to the surface of the semi-finished product, so that also such roll 19 contacts the semi-finished product 2.

Said embodiment is particularly advantageous when also the roll 19 is of motorized type, thus facilitating the transfer at predetermined and constant speed of the semi-finished product 2 (arrow A) towards the assembly drum 3.

In Figure 3, the apparatus 10 according to the present invention further comprises a support element 12 (for example, a roll table or a conveyor belt) interposed between the rolls 17 and 19 and adapted to provide a support plane parallel to the semi-finished product 2 traveling (arrow A) towards an assembly drum (not shown). Such support element 12 carries out the function of supporting the semi-finished product 2 particularly when the latter is solely made of an elastomeric material and does not possess any reinforcing structure.

Said element 12 therefore prevents that the semi-finished product 2 may undergo to undulations or bends which may cause stretches and/or deformations of the material in the space comprised between the rolls 17 and 19.

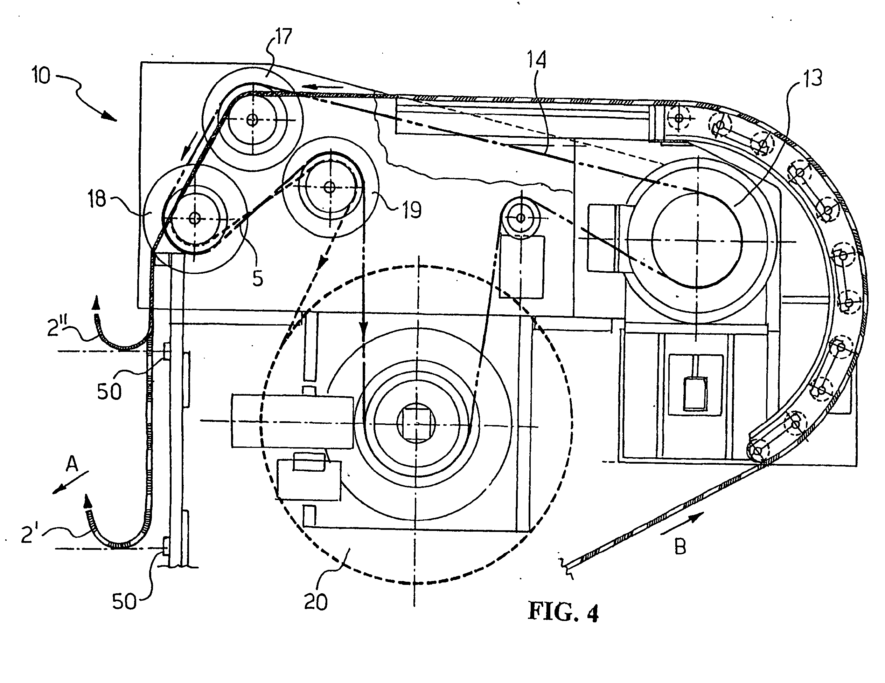

Figure 4 shows an additional embodiment of the supplying apparatus 10 according to the present invention, in which the path followed by the release fabric 5 is different from that shown in Figure 2. In fact, according to said additional embodiment, the release fabric 5 is not detached from the semi-finished product 2 at the first roll 17, but at the second roll 18. Thus, this means that the semi-finished product, still coupled to the release fabric 5, travels along a surface portion of both rolls 17 and 18, and the detachment from said release fabric 5 takes place at the second roll 18 and not at the roll 17, as described above.

Moreover, an additional difference of the embodiment shown in Figure 4 with respect to that of Figure 2 consists in the fact that all the rolls 17, 18, 19 are motorized and in the fact that the motor 13 drives both the aforementioned rolls and the collecting beam 20, as shown in Figure 4 by the path of the common chain 14.

In a further embodiment of the invention (not shown), also the feeding spool 6 is driven together with the rolls 17, 18, 19 and the beam 20.

Moreover, Figure 4 partly shows also the festoon formed by the semi-finished product 2 (for example, a belt strip) arranged downstream of the supplying apparatus 10. More in detail, Figure 4 shows a festoon of maximum width 2' and a festoon of minimum width 2", the length of which is controlled by a pair of photoelectric cells 50; which read the height of the bend formed by the festoon. According to such reading, the aforementioned photoelectric cells adjust the festoon length, actuating and deactivating the supplying apparatus so as to maintain, upstream of the assembly drum, the necessary amount of semi-finished product for ensuring the continuity of the manufacturing process in case of replacement of the feeding spool or in case of failure on the line.

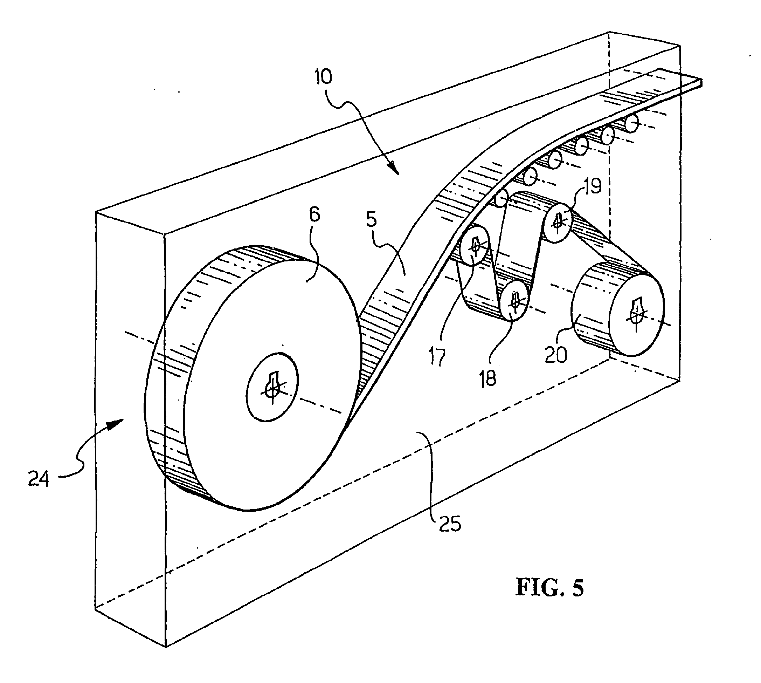

In a further embodiment (shown in Figure 5), the devices of the supplying apparatus according to the present invention are arranged in a casing 24 removably connectable to the assembly plant and, more particularly, to the frame of the feeding apparatus of each specific semi-finished product to an assembly drum.

The casing 24 enables a quick change of the entire supplying apparatus 10 whenever, for example, maintenance operations are required, or whenever the assembly machine, to which such apparatus 10 is coupled, must change its production and meet the requirements of dimensional and/or shape variation of the semi-finished product 2 to be sent to the assembly drum 3.

In a supplying apparatus of the prior art, in order to meet the requirements of a different production, it was necessary to load on the plant a storing spool loaded with the semi-finished product before starting said production. Let us suppose that on the plant there is a storing spool still partly loaded with the semi-finished product used in the previous production; in this case, it is necessary to unwind the release fabric from the collecting beam and rewind the same on the storing spool, i.e. on the semi-finished product, coupled to said release fabric, still stored on the storing spool.

Afterwards, it is necessary to extract said storing spool and replace the same with the storing spool loaded with the semi-finished product corresponding to the new production, and then start the new operating cycle.

Let us suppose that it is necessary to feed the assembly drum with a semi-finished product of the type already used in a previous cycle, and wound on a spool already started and unloaded from the plant at the end of said previous cycle; in this case, it is necessary to load the storing spool on the supplying apparatus, unwind from the storing spool the release fabric already detached from the previous semi-finished product previously used and wind the same on the collecting beam until on the storing spool the assembly formed by the semi-finished product coupled to the release fabric is available again. At this point, a new production cycle can start.

The apparatus according to the present invention eliminates the aforementioned several operations and the consequent technical times required for carrying out a change of the semi-finished product. In fact, in order to immediately shift from an operating cycle to a different subsequent cycle it is simply necessary to remove the casing 24 and replace the same with a new casing 24, containing the new type of desired semi-finished product, regardless of whether the old casing has ended the spool 6 or whether the new casing is provided with a new spool 6.

As shown in Figure 5, the casing 24 comprises a frame 25 on which the shaft of the storing spool 6 with the respective spool, the shaft of the collecting beam 20 with the respective beam, the shafts of the rolls 17, 18, 19 with the same rolls, and the axes of a plurality of idle rolls for supporting the semi-finished product up to the outlet from the casing are mounted.

According to a particular embodiment of the invention, at least the shafts of the spool 6, of the beam 20 and of the roll 17 are integrally rotatably connectable with respective actuation pins mounted on a frame not shown of the feeding apparatus, upstream of the assembly drum, which in addition to the motors for driving said pins further comprises the braking device 7 of the spool 6, and a computerized system not shown for the synchronized control of said devices.

The casing 24 is mounted on said frame by associating said shafts to the corresponding pins perpendicularly protruding from said frame: the supplying process of the semi-finished product is thus carried out with no substantial differences with respect to what previously described. When the spool 6 is empty, the casing is replaced with another casing provided with a new storing spool.

If the semi-finished product supply must be interrupted when the spool is partly loaded, for example because of a product change or of other reasons, the casing is removed without any need of rewinding the release fabric on the spool 6; the same casing may be reused on the same or another assembly plant starting again without delays from the condition in which the casing was previously removed from the feeder.

The following Table 1 shows the values of the main operating parameters of an apparatus 10 according to the invention, used for respectively supplying the sidewalls and the liner of a tire.

**Table 1**

| MEASURED VALUE | PRODUCT | |
|---|---|---|
| | SIDEWALLS | LINER |
| Rolls dragging speed | 15 - 20 m/min | 10 -15 m/min |
| Pulling torque | 75 Nm | 170 Nm |
| Pulling force = (pulling torque)/(rolls diameter) (equal to 30 mm) | 2500 N | 5500 N |
| Braking torque of feeding spool | 50 Nm | 250 Nm |
| Friction torque of collecting spool | 12.5 Nm | 30 Nm |
| Weight of fully loaded feeding spool | 300 Kg | 1000 Kg |

According to the present invention, a computerized system controls the operation of the apparatus 10 according to the predetermined production method.

In the first place, said system adjusts the rotation speed of the storing spool 6 by means of a braking device 7 as a function of the amount of unwound semi-finished product.

Said computerized system, in fact, acts on the braking device 7 by maintaining the release fabric permanently in tension but simultaneously varying the rotation speed of the spool 6, preferably according to a predetermined law, as the quantity of supplied semi-finished product varies, so as to ensure a constant and predetermined flow of semi-finished product to the assembly drum.

One object of the supplying apparatus 10, in fact, is that of being capable of supplying the semi-finished product 2 at a constant speed equal to the speed which the latter has at the assembly drum, speed which in said last portion of path is imparted to the semi-finished product by the rotation of the motorized rolls 22.

The adjustment of the rotation speed of the spool 6 may be obtained, for example, by providing the braking device 7 with a plurality of photoelectric cells arranged in front of a face of the spool, and with a luminous source arranged in front of the other face of the spool. During the unwinding of the semi-finished product, as the spool 6 empties, the photoelectric cells are progressively illuminated by the luminous source and transmit to the computerized system the measure of the current diameter of the spool still loaded with the semi-finished product. In this way, the computerized system corrects the spool rotation speed on the basis of the emptying level reached.

Similarly, the computerized system controls the motor 21 which controls the speed of the collecting beam 20 by means of a clutch device, so that the pulling action exerted on the release fabric 5 is constant in time without being affected by the mass variation which the beam 20 withstands due to the increase of the amount of collected release fabric. The adjustment of the rotation speed of the beam 20, i.e. the decrease of the value thereof while the release fabric is being wound, allows to transfer the semi-finished product 2 at a constant and predetermined speed without creating undesired stretches in the material since the release fabric is inextensible according to the invention.

The constant transfer speed of the semi-finished product, as said above, is also obtained thanks to the motorization of at least one roll of the apparatus 10 according to the invention. In fact, such motorization enables to complement the pulling action exerted by the beam 20 on the release fabric 5 to which the semi-finished product 2 is coupled, thus facilitating the conveying of the latter without undesired stretches towards the assembly drum 3.

The computerized system receives the real data of the parameters concerned (speed, positions and pulls mentioned above) during the steps of the assembling process; the computerized system carries out the necessary corrections for restoring the apparatus operation to the programmed conditions by comparing the stored data and the real data, in the presence of possible deviations from predetermined threshold values.

The method and the apparatus according to the present invention enable to accomplish a supply of a semi-finished product without creating stretches in the semi-finished product and causing dimensional variations of the same along the path comprised between the storing spool 6 and the assembly drum 3.

This result is particularly desired in order to provide the assembly drum with semi-finished products free from deformations and structural modifications which may negatively affect the quality of the finished product.

For example, when the semi-finished product is a carcass ply, the absence of longitudinal dilatations ensures that the metal cords forming the ply are arranged, during the step of configuring the carcass, with the predetermined density calculated for obtaining a predetermined resistance of the carcass in the tire operating conditions.

Moreover, it must be noted that the high tensioning of the release fabric 5, made possible by the use of a substantially inextensible fabric, significantly contributes to the even and stretchless unwinding of the semi-finished product 2 from the storing spool 6.

The present invention is not strictly limited to what described hereinabove, since the same also comprises all those alternative solutions and measures which, although not described, may be easily inferred by any man skilled in the art on the basis of the present description.

For example, the apparatus 10 may comprise a different number of rolls with respect to what is illustrated in the figures, only two rolls or even more than three, provided that at least one is motorized, and the overall arrangement of the rolls is such as to impart a tension on the release fabric capable of transferring, without stretches, the semi-finished product 2 towards the assembly drum 3.

## Claims

1. Method for supplying a semi-finished product (2) made of elastomeric material towards an assembly and/or handling station of the semi-finished products, said product (2) being supported on a release fabric (5) and stored in concentric turns in a storing spool (6) by associating the release fabric (5) to the semi-finished product (2) prior to storing the semi-finished product (2) in said spool (6), the method comprising the steps of:
a) carrying out a braked unwinding of such turns from said storing spool (6);
b) detaching said release fabric (5) from said semi-finished product (2) by imposing to such fabric (5) and to such semi-finished product (2) different advancing directions;
c) conveying said release fabric (2) towards a collecting beam (20), said beam (20) being rotated around the axis thereof by means of a motor means (21);
d) conveying said semi-finished product (2) towards said assembly and/or handling station of the semi-finished products,
e) applying to said release fabric (5) a traction force adapted to carry out said braked unwinding, said force being applied at an intermediate point of the path of such fabric (5) between said spool (6) and said beam (20).

2. Method according to claim 1, **characterized in that** it comprises the step of applying said traction force at the same point of imposition of said different advancing directions.

3. Method according to claim 1, **characterized by** providing a plurality of guiding devices (17, 18, 19) and by winding said release fabric around arc portions of said plurality of guiding devices (17, 18, 19).

4. Method according to claim 3, **characterized by** providing three successive guiding devices (17, 18, 19) and by motorizing at least two of said guiding devices (17,18,19).

5. Method according to claim 1, **characterized by** separating said release fabric (5) from said semi-finished product (2) at the first (17) of said guiding devices (17, 18, 19).

6. Method according to claim 1, **characterized by** braking said storing spool (6) as a function of the diameter of said spool (6) charged with said semi-finished product (2) during the unwinding step.

7. Method according to claim 1, **characterized in that** said release fabric (5) is traction-inextensible.

8. Apparatus (10) for supplying a semi-finished product (2) made of elastomeric material, supported on a release fabric (5) and stored in concentric turns in a storing spool (6) to an assembly and/or handling station of the semi-finished products, comprising:
a) a braking device (7) for adjusting the unwinding speed of said turns from said storing spool (6);
b) a detachment device for detaching said release fabric (5) from said semi-finished product (2);
c) a collecting beam (20) for collecting said release fabric (5) ; and
d) first motor means (21) for rotating said collecting beam (20) about its rotation axis,
**characterized in that** the apparatus comprises second motor means for rotating said detachment device.

9. Apparatus (10) according to claim 8, **characterized in that** it is provided with a plurality of guiding devices (17, 18, 19) for guiding said fabric (5), at least one of said guiding devices (17, 18, 19) being motorized.

10. Apparatus (10) according to claim 8, **characterized in that** said detachment device is a roll.

11. Apparatus (10) according to claim 8, **characterized in that** it comprises at least a first guiding device (17) and a second guiding device (18) successive to the first one, said first guiding device (17) being motorized and being arranged downstream of the outlet of the semi-finished product (2) leaving the storing spool (6), said second guiding device (18) being arranged at an offset position with respect to said first guiding device (17) and comprised between said first guiding device (17) and said collecting beam (20).

12. Apparatus (10) according to claim 11 **characterized in that** the axes of said first (17) and second (18) guiding devices are parallel to the axis of the collecting beam (20), and **in that** said release fabric (5) is wound around an arc portion of said first guiding device (17) with a first surface thereof, and around an arc surface of said second guiding device (18) with the surface opposite with respect to the first one.

13. Apparatus (10) according to claim 8, **characterized in that** it comprises at least three guiding devices (17, 18, 19), the first guiding device (17) being arranged downstream of the storing spool (6), the third guiding device (19) being arranged upstream of the collecting beam (20) and at a lowered position with respect to the conveying direction of the semi-finished product (2) towards said assembly and/or handling station, the second guiding device (18) being arranged between the first (17) and the third (19) guiding device at a lowered position with respect to both devices (17, 19), the axes of said guiding devices (17, 18, 19) being parallel to one another and parallel to the axis of the collecting beam (20).

14. Apparatus (10) according to claim 8, **characterized in that** it comprises a removable casing (24) with respect to said assembly and/or handling station of a rubber item, said casing (24) being provided with a base on which the rotation axes of cylindrical feeding and collecting surfaces of said detachment device are idly supported.

15. Apparatus (10) according to claim 8, **characterized in that** said release fabric (5) is of inextensible type.

16. Apparatus (10) according to claim 8, **characterized in that** said release fabric (5) is made of Mylar®.

## Patentansprüche

1. Verfahren zum Zuführen eines Halbfabrikats (2) aus elastomerem Material zu einer Anordnung und/oder Handhabungsstation für die Halbfabrikate, wobei das Fabrikat (2) auf einem Trenntuch (5) gehalten und in konzentrischen Windungen in einer Lagertrommel (6) gelagert wird, indem das Trenntuch (5) dem Halbfabrikat (2) vor dem Lagern des Halbfabrikats (2) in der Trommel (6) zugeordnet wird, und wobei das Verfahren die Schritte aufweist:
a) Ausführen eines gebremsten Abwickelns solcher Windungen von der Lagertrommel (6),
b) Ablösen des Trenntuchs (5) von dem Halbfabrikat (2), indem diesem Tuch (5) und dem Halbfabrikat (2) unterschiedliche Vorwärtsbewegungsrichtungen aufgeprägt werden,
c) Fördern des Trenntuchs (2) zu einem Sammelträger (20), der mit Hilfe einer Motoreinrichtung (21) um seine Achse gedreht wird,
d) Fördern des Halbfabrikats (2) zu der Anordnung und/oder Handhabungsstation für die Halbfabrikate und
e) Anlegen einer Zugkraft, die an das Ausführen des gebremsten Abwickelns angepasst ist, auf das Trenntuch (5), wobei die Kraft an einem Zwischenpunkt des Wegs des Tuchs (5) zwischen der Trommel (6) und dem Träger (20) angelegt wird.

2. Verfahren nach Anspruch 1, **dadurch gekennzeichnet, dass** es den Schritt aufweist, die Zugkraft an der gleichen Stelle anzulegen, an der die unterschiedlichen Vorwärtsbewegungsrichtungen aufgeprägt werden.

3. Verfahren nach Anspruch 1, **gekennzeichnet durch** Bereitstellen einer Vielzahl von Führungsvorrichtungen (17, 18, 19) und **durch** Wickeln des Trenntuchs um Bogenabschnitte der Vielzahl von Führungsvorrichtungen (17, 18, 19).

4. Verfahren nach Anspruch 3, **gekennzeichnet durch** Bereitstellen von drei aufeinander folgenden Führungsvorrichtungen (17, 18, 19) und **durch** Motorisieren von wenigstens zwei der Führungsvorrichtungen (17, 18, 19).

5. Verfahren nach Anspruch 1, **gekennzeichnet durch** Trennen des Trenntuchs (5) von dem Halbfabrikat (2) an der ersten Führungsvorrichtung (17) der Führungsvorrichtungen (17, 18, 19).

6. Verfahren nach Anspruch 1, **gekennzeichnet durch** Bremsen der Lagertrommel (6) als Funktion des Durchmessers der mit dem Halbfabrikat (2) beladenen Trommel (6) während des Abwickelschritts.

7. Verfahren nach Anspruch 1, **dadurch gekennzeichnet, dass** das Trenntuch (5) auf Zug nicht dehnbar ist.

8. Vorrichtung (10) zum Zuführen eines Halbfabrikats (2) aus elastomerem Material, das auf einem Trenntuch (5) gehalten und in konzentrischen Windungen in einer Lagertrommel (6) gelagert ist, zu einer Anordnung und/oder Handhabungsstation für die Halbfabrikate
a) mit einer Bremsvorrichtung (7) zum Einstellen der Abwickelgeschwindigkeit der Windungen von der Lagertrommel (6),
b) mit einer Ablösevorrichtung zum Ablösen des Trenntuchs (5) von dem Halbfabrikat (2),
c) mit einem Sammelträger (20) zum Sammeln des Trenntuchs (5) und
d) mit einer ersten Motoreinrichtung (21) zum Drehen des Sammelträgers (20) um seine Drehachse,
**dadurch gekennzeichnet,**
- **dass** die Vorrichtung eine zweite Motoreinrichtung zum Drehen der Ablösevorrichtung aufweist.

9. Vorrichtung (10) nach Anspruch 8, **dadurch gekennzeichnet, dass** sie mit einer Vielzahl von Führungsvorrichtungen (17, 18, 19) zum Führen des Tuchs (5) versehen ist, wobei wenigstens eine der Führungsvorrichtungen (17, 18, 19) motorisiert ist.

10. Vorrichtung (10) nach Anspruch 8, **dadurch gekennzeichnet, dass** die Ablösevorrichtung eine Walze ist.

11. Vorrichtung (10) nach Anspruch 8, **dadurch gekennzeichnet, dass** sie wenigstens eine erste Führungsvorrichtung (17) und eine zweite, auf die erste folgende Führungsvorrichtung (18) aufweist, wobei die erste Führungsvorrichtung (17) motorisiert und stromab vom Auslass des die Lagertrommel (6) verlassenden Halbfabrikats (2) angeordnet ist, und wobei die zweite Führungsvorrichtung (18) in einer zur ersten Führungsvorrichtung (17) versetzten Position und zwischen der ersten Führungsvorrichtung (17) und dem Sammelträger (20) angeordnet ist.

12. Vorrichtung (10) nach Anspruch 11, **dadurch gekennzeichnet, dass** die Achsen der ersten Führungsvorrichtung (17) und der zweiten Führungsvorrichtung (18) parallel zur Achse des Sammelträgers (20) sind, und dass das Trenntuch (5) um einen Bogenabschnitt der ersten Führungsvorrichtung (17) mit einer ersten Oberfläche von ihm und um eine Bogenfläche der zweiten Führungsvorrichtung (18) mit seiner der ersten Oberfläche gegenüberliegenden Oberfläche herumgelegt ist.

13. Vorrichtung (10) nach Anspruch 8, **dadurch gekennzeichnet, dass** sie wenigstens drei Führungsvorrichtungen (17, 18, 19) aufweist, wobei die erste Führungsvorrichtung (17) stromab von der Lagertrommel (6) angeordnet ist, die dritte Führungsvorrichtung (19) stromauf von dem Sammelträger (20) und in einer abgesenkten Stellung bezüglich der Förderrichtung des Halbfabrikats (2) zu der Anordnung und/oder der Handhabungsstation hin angeordnet ist, die zweite Führungsvorrichtung (18) zwischen der ersten Führungsvorrichtung (17) und der dritten Führungsvorrichtung (19) an einer abgesenkten Position bezüglich der beiden Vorrichtungen (17, 19) angeordnet ist und die Achsen der Führungsvorrichtungen (17, 18, 19) parallel zueinander und parallel zur Achse des Sammelträgers (20) sind.

14. Vorrichtung (10) nach Anspruch 8, **dadurch gekennzeichnet, dass** sie bezüglich der Anordnung und/oder Handhabungsstation für einen Kautschukgegenstand ein abnehmbares Gehäuse (24) aufweist, das mit einer Basis versehen ist, an der die Drehachsen von zylindrischen Zuführ- und Sammeloberflächen der Ablösevorrichtung leerlaufend gelagert sind.

15. Vorrichtung (10) nach Anspruch 8, **dadurch gekennzeichnet, dass** das Trenntuch (5) nicht dehnbar ist.

16. Vorrichtung (10) nach Anspruch 8, **dadurch gekennzeichnet, dass** das Trenntuch (5) aus Mylar® hergestellt ist.

## Revendications

1. Procédé pour fournir un produit semi-fini (2) en matériau élastomère vers un poste d'assemblage et/ou de manipulation des produits semi-finis, ledit produit (2) étant supporté sur une toile amovible (5) et stocké en spires concentriques dans une bobine de stockage (6) en associant la toile amovible (5) au produit semi-fini (2) avant de stocker le produit semi-fini (2) dans ladite bobine (6), le procédé comprenant les étapes consistant à :
a) effectuer un déroulage freiné des spires de ladite bobine de stockage (6) ;
b) détacher ladite toile amovible (5) dudit produit semi-fini (2) en imposant à la toile (5) et au produit semi-fini (2) des directions d'avance différentes ;
c) transporter ladite toile amovible (2) vers une ensouple collectrice (20), ladite ensouple (20) étant mise en rotation autour de son axe par l'intermédiaire d'un moyen formant moteur (21) ;
d) transporter ledit produit semi-fini (2) vers ledit poste d'assemblage et/ou de manipulation des produits semi-finis,
e) appliquer à ladite toile amovible (5) un effort de traction adapté pour effectuer ledit déroulage freiné, ledit effort étant appliqué en un point intermédiaire du chemin de la toile (5) entre ladite bobine (6) et ladite ensouple (20).

2. Procédé selon la revendication 1, **caractérisé en ce qu'**il comprend l'étape consistant à appliquer ledit effort de traction au même point d'application que lesdites directions d'avance différentes.

3. Procédé selon la revendication 1, **caractérisé par** le fait de prévoir une pluralité de dispositifs de guidage (17, 18, 19) et d'enrouler ladite toile amovible autour de parties d'arc de ladite pluralité de dispositifs de guidage (17, 18, 19).

4. Procédé selon la revendication 3, **caractérisé par** le fait de prévoir trois dispositifs de guidage successifs (17, 18, 19) et de motoriser au moins deux desdits dispositifs de guidage (17, 18, 19).

5. Procédé selon la revendication 1, **caractérisé par** le fait de séparer ladite toile amovible (5) dudit produit semi-fini (2) au niveau du premier (17) des dispositifs de guidage (17, 18, 19).

6. Procédé selon la revendication 1, **caractérisé par** le fait de freiner ladite bobine de stockage (6) en fonction du diamètre de la bobine (6) chargée avec ledit produit semi-fini (2) pendant l'étape de déroulage.

7. Procédé selon la revendication 1, **caractérisé en ce que** ladite toile amovible (5) est inextensible en traction.

8. Dispositif (10) pour fournir un produit semi-fini (2) en matériau élastomère, supporté sur une toile amovible (5) et stocké en spires concentriques dans une bobine de stockage (6) vers un poste d'assemblage et/ou de manipulation des produits semi-finis, comprenant :
a) un dispositif de freinage (7) pour régler la vitesse de déroulage desdites spires par rapport à ladite bobine de stockage (6) ;
b) un dispositif de séparation pour détacher ladite toile amovible (5) du produit semi-fini (2) ;
c) une ensouple collectrice (20) pour collecter ladite toile amovible (5) ; et
d) un premier moyen formant moteur (21) pour faire tourner ladite ensouple collectrice (20) autour de son axe de rotation,
**caractérisé en ce que** le dispositif comprend un deuxième moyen formant moteur pour faire tourner ledit dispositif de séparation.

9. Dispositif (10) selon la revendication 8, **caractérisé en ce qu'**il est muni d'une pluralité de dispositifs de guidage (17, 18, 19) pour guider ladite toile (5), au moins l'un desdits dispositifs de guidage (17, 18, 19) étant motorisé.

10. Dispositif (10) selon la revendication 8, **caractérisé en ce que** ledit dispositif de séparation est un rouleau.

11. Dispositif (10) selon la revendication 8, **caractérisé en ce qu'**il comprend au moins un premier dispositif de guidage (17) et un deuxième dispositif de guidage (18) à la suite du premier, ledit premier dispositif de guidage (17) étant motorisé et étant placé en aval de la sortie du produit semi-fini (2) qui quitte la bobine de stockage (6), ledit deuxième dispositif de guidage (18) étant placé dans une position décalée par rapport audit premier dispositif de guidage (17) et comprise entre ledit premier dispositif de guidage (17) et ladite ensouple collectrice (20).

12. Dispositif (10) selon la revendication 11, **caractérisé en ce que** les axes des premier (17) et deuxième (18) dispositifs de guidage sont parallèles à l'axe de l'ensouple collectrice (20), et **en ce que** ladite toile amovible (5) est enroulée autour d'une partie d'arc dudit premier dispositif de guidage (17) avec une première de ses surfaces, et autour d'une surface d'arc dudit deuxième dispositif de guidage (18) avec la surface opposée à la première.

13. Dispositif (10) selon la revendication 8, **caractérisé en ce qu'**il comprend au moins trois dispositifs de guidage (17, 18, 19), le premier dispositif de guidage (17) étant placé en aval de la bobine de stockage (6), le troisième dispositif de guidage (19) étant placé en amont de l'ensouple collectrice (20) et dans une position abaissée par rapport à la direction de transport du produit semi-fini (2) vers ledit poste d'assemblage et/ou de manipulation, le deuxième dispositif de guidage (18) étant placé entre le premier (17) et le troisième (19) dispositifs de guidage dans une position abaissée par rapport aux deux dispositifs (17, 19), les axes des dispositifs de guidage (17, 18, 19) étant parallèles entre eux et parallèles à l'axe de l'ensouple collectrice (20).

14. Dispositif (10) selon la revendication 8, **caractérisé en ce qu'**il comprend un carter amovible (24) par rapport audit poste d'assemblage et/ou de manipulation d'un article en caoutchouc, ledit carter (24) étant pourvu d'une base sur laquelle les axes de rotation de surfaces d'alimentation et de collecte cylindriques dudit dispositif de séparation sont supportés de façon libre.

15. Dispositif (10) selon la revendication 8, **caractérisé en ce que** ladite toile amovible (5) est de type inextensible.

16. Dispositif (10) selon la revendication 8, **caractérisé en ce que** ladite toile amovible (5) est en Mylar®.
